# DEMANDE DE BREVET EUROPEEN

(11) **EP 0 610 133 A1**
(43) Date de publication de la demande: **10.08.1994**
(21) Numéro de dépôt: 94400213.8
(22) Date de dépôt: 01.02.1994
(51) Int. Cl.: G06F 1/30, G06F 11/20, H02J 9/06

(54) **Appareil à onduleur, notamment pour la micro- ou mini-informatique**

(30) Priorité: 03.02.1993 FR 9301162
(71) Demandeur: INVESTRADE, F-60802 Crépy en Valois (FR)
(72) Inventeur: Georget, Yves-Marie, F-78500 Sartrouville (FR); Guillou, Alain, F-95450 Vigny (FR); Pinloche, Jean-Claude, F-95240 Cormeilles en Parisis (FR)
(74) Mandataire: Picard, Jean-Claude Georges

(57) **Abrégé**

Cet appareil, destiné plus particulièrement à alimenter un ordinateur, se caractérise en ce qu'à un onduleur est intégrée une unité de sauvegarde. Un appareil conforme à l'invention assure donc à la fois la fonction de sécurité électrique et la fonction de sauvegarde des informations, ce qui représente pour l'utilisateur une grande simplification.

## Description

La présente invention concerne un appareil à onduleur destiné en particulier à alimenter une unité centrale d'ordinateur pouvant être raccordée notamment à un moniteur, à un système écran-clavier, à une unité de disquettes, à une imprimante et à une mémoire à disque dur, cet appareil étant alimenté à partir d'un réseau d'alimentation et comportant, de façon connue, une batterie de réserve de courant propre à alimenter automatiquement l'onduleur proprement dit et par suite ladite unité centrale en cas de panne dudit réseau d'alimentation.

Actuellement les actions d'arrêt du système informatique et de sauvegarde des données sont réalisées à partir d'appareils séparés qui nécessitent des opérations manuelles séquentielles par l'utilisateur.

La plupart des onduleurs du marché dédiés à la micro ou à la mini-informatique remplissent uniquement leur fonction originale : protéger les équipements électroniques sensibles contre les perturbations de l'alimentation électrique des récepteurs qui ne peuvent supporter sans dommages une coupure inopinée d'énergie.

Les fonctions de protection de l'alimentation électrique et de stockage sont réalisées à partir d'appareils différents présentés sous boitiers séparés qui nécessitent des liaisons par de nombreux câbles. Chaque appareil comporte ses boutons de mise sous et hors tension, ses avertisseurs, ses modes d'emploi qui rendent souvent difficile une exploitation fiable par un utilisateur qui n'est pas un spécialiste.

Le client soucieux de la sécurité de son exploitation doit donc s'équiper de plusieurs appareils provenant de fournisseurs différents (avec les problèmes de compatibilité que cela implique) : d'un côté un onduleur, de l'autre une unité de sauvegarde.

Le but de la présente invention est de remédier à ces inconvénients de la technique antérieure.

A cet effet, un appareil à onduleur conforme à l'invention, du type général défini au début, est caractérisé en ce qu'il comporte un dispositif de déclenchement des opérations de sauvegarde ainsi qu'une unité de sauvegarde intégrée, ledit dispositif, comportant un logiciel d'automatisation des fonctions, étant lui-même déclenché soit par une commande manuelle de mise en sauvegarde également intégrée, soit automatiquement, par suite d'une panne dudit réseau d'alimentation ou d'une programmation appropriée du logiciel de sauvegarde de ladite unité centrale, ce déclenchement produisant automatiquement, par une liaison appropriée audit logiciel de sauvegarde de ladite unité centrale, la fermeture des fichiers en cours dans l'ordinateur, le transfert des informations dudit disque dur et autres mémoires internes de l'ordinateur dans ladite unité de sauvegarde intégrée, et enfin la mise à l'arrêt de ladite unité centrale et des unités qui lui sont raccordées.

Un appareil conforme à l'invention assure donc à la fois la fonction de sécurité électrique et la fonction de sauvegarde des informations, ce qui représente pour l'utilisateur une grande simplification.

Cet appareil pourra aussi comporter des dispositifs indicateurs ou d'alarme, de type sonore ou visuel, traduisant l'état des différentes fonctions automatisées.

Bien entendu, la même sauvegarde sera réalisée automatiquement à chaque fois que ledit appareil sera mis hors tension volontairement ou involontairement. A la fin de chaque sauvegarde, en outre, le matériel protégé ainsi que les périphériques de traitement et de stockage des informations numérisées pourront être mis hors tension automatiquement.

L'invention assure donc à l'utilisateur la fin de son enregistrement même en cas de coupure du réseau d'alimentation électrique qui alimente l'appareil.

Il est à noter, en outre, que grâce à ce que l'on a appelé plus haut la "programmation appropriée du logiciel de sauvegarde" les opérations de sauvegarde pourront être automatiquement déclenchées, par exemple tous les jours à la même heure, même en l'absence de panne du réseau d'alimentation ou d'intervention extérieure sur ladite commande manuelle. De toute façon, si une coupure du réseau d'alimentation se produit pendant le déroulement des opérations de sauvegarde, l'onduleur prendra automatiquement le relais de l'alimentation électrique, de sorte à terminer lesdites opérations.

L'unité de sauvegarde intégrée à l'appareil pourra comporter tout support de mémorisation approprié, tel que disque, cartouche, CD ROM, streamer ou analogues.

Conformément à une disposition complémentaire de l'invention, l'appareil peut encore comporter des dispositifs de contrôle tels qu'un dispositif de contrôle de l'état de charge de ladite batterie, dont les informations pourront être transmises par la liaison précitée, audit logiciel de sauvegarde de l'unité centrale. Ce dernier pourra recevoir d'autres informations, afin de pouvoir interdire, notamment, toute connexion extérieure sur l'ordinateur, dans le cas où celui-ci fait partie d'un réseau avec serveur, ou même pour commander une déconnexion s'il y a une interruption ou une panne du réseau d'alimentation électrique, une opération de sauvegarde étant donc en cours, ou sur le point de se déclencher.

Ainsi, et dans tous les cas, la sauvegarde est conduite à son terme de manière sûre avec extinction automatique après relecture, cette relecture constituant une sécurité supplémentaire, assurant que le contenu du disque dur, ou seulement des parties ou fichiers préalablement sélectionnés de celui-ci, ont bien été reproduits dans l'unité de sauvegarde de l'appareil à onduleur.

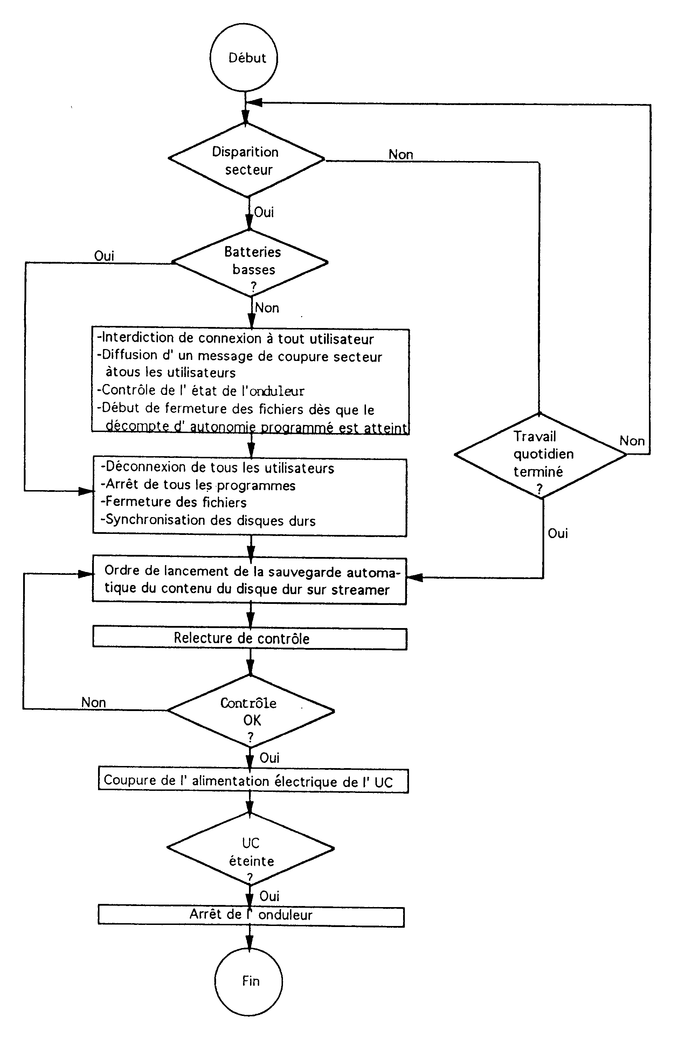

A la figure unique du dessin ci-annexé, on a représenté, à titre d'exemple nullement limitatif, un logigramme montrant le fonctionnement d'un appareil à onduleur et sauvegarde intégrée conforme à l'invention. Ce logigramme se lit de lui-même. UC désigne l'unité centrale de l'ordinateur ; toutes les autres fonctions ou parties de l'appareil sont indiquées en clair. On remarquera qu'il intègre une opération de contrôle des batteries de l'onduleur. Le cercle supérieur portant l'inscription DEBUT représente l'interruption de l'alimentation du réseau, qui lance l'arrêt propre et automatique des programmes en cours de traitement dans l'ordinateur. Il est à noter que l'onduleur est connecté "ON LINE", c'est-à-dire en ligne, ou en "STAND BY", c'est-à-dire prêt à intervenir en cas de coupure.

Comme cela résulte déjà de tout ce qui précède, les principaux avantages de l'invention sont de :
- permettre à tout utilisateur de déclencher une sauvegarde par une simple action sur un seul bouton, l'alimentation électrique étant assurée pendant cette sauvegarde ;
- protéger en toute circonstance l'alimentation électrique de la configuration informatique contre les micro-coupures et coupures ;
- simplifier les raccordements externes, qui se trouvent réduits à trois liaisons extérieures (une liaison de puissance, et deux liaisons pour les signaux numériques);
- assurer l'arrêt propre du système, qui est autonome, et déclencher automatiquement les procédures de :
   . clôture des fichiers,
   . sauvegarde des informations ; et
- simplifier les manoeuvres de protection de l'exploitation et de sauvegarde des informations.

L'invention offre également un grand confort d'utilisation et un important gain de temps : il n'est plus nécessaire de rester en permanence près de la configuration pour surveiller l'opération pendant la sauvegarde ; en cas de défaut secteur, l'onduleur assure la qualité de l'alimentation électrique de l'ensemble de la configuration jusqu'à la clôture du travail de sauvegarde. L'utilisateur peut désormais assurer quotidiennement la sauvegarde, qu'il déclenche au moment où il quitte son bureau.

## Revendications

1. Appareil à onduleur destiné en particulier à alimenter une unité centrale d'ordinateur pouvant être raccordée notamment à un moniteur, à un système écran-clavier, à une unité de disquettes, à une imprimante et à une mémoire à disque dur, cet appareil étant alimenté à partir d'un réseau d'alimentation et comportant, de façon connue, une batterie de réserve de courant propre à alimenter automatiquement l'onduleur proprement dit et par suite ladite unité centrale en cas de panne dudit réseau d'alimentation, caractérisé en ce qu'il comporte un dispositif de déclenchement des opérations de sauvegarde ainsi qu'une unité de sauvegarde intégrée, ledit dispositif, comportant un logiciel d'automatisation des fonctions, étant lui-même déclenché soit par une commande manuelle de mise en sauvegarde également intégrée, soit automatiquement, par suite d'une panne dudit réseau d'alimentation ou d'une programmation appropriée du logiciel de sauvegarde de ladite unité centrale, ce déclenchement produisant automatiquement, par une liaison appropriée audit logiciel de sauvegarde de ladite unité centrale, la fermeture des fichiers en cours dans l'ordinateur, le transfert des informations dudit disque dur et autres mémoires internes de l'ordinateur dans ladite unité de sauvegarde intégrée, et enfin la mise à l'arrêt de ladite unité centrale et des unités qui lui sont raccordées.

2. Appareil selon la revendication 1, caractérisé en ce que ladite unité de sauvegarde intégrée comporte tout support de mémorisation approprié, tel que disque, cartouche, CD ROM, streamer ou analogues.

3. Appareil selon la revendication 1 ou 2, caractérisé en ce qu'il comporte des dispositifs de contrôle tels qu'un dispositif de contrôle de l'état de charge de ladite batterie, dont les informations pourront être transmises par la liaison précitée, audit logiciel de sauvegarde de l'unité centrale.
